# EUROPÄISCHE PATENTSCHRIFT

(11) **EP 3 364 716 B1**
(45) Veröffentlichungstag und Bekanntmachung des Hinweises auf die Patenterteilung: **01.06.2022**
(21) Anmeldenummer: 18000012.7
(22) Anmeldetag: 08.01.2018
(51) Int. Cl.: H05B 3/34, H05B 3/84

(54) **STREULICHTBLENDE EINES BILDERFASSUNGSGERÄTES**
LIGHT SCATTERING DIAPHTRAGM OF AN IMAGE RECORDING DEVICE
DIAPHRAGME ANTI-LUMIÈRE DIFFUSÉE D'UN APPAREIL DE DÉTECTION D'IMAGES

(30) Priorität: 17.02.2017 DE 102017001513
(43) Veröffentlichungstag der Anmeldung: 22.08.2018
(73) Patentinhaber: K.L. Kaschier- und Laminier GmbH, 48455 Bad Bentheim-Gildehaus (DE)
(72) Erfinder: Wehninck, Rembert Schulze, 82327 Tutzing (DE); Großpietsch, Thomas Ewald, 48431 Rheine (DE)
(74) Vertreter: Cohausz Hannig Borkowski Wißgott

(56) Entgegenhaltungen:
- WO-A2-2009/146944
- DE-A1-102014 006 891
- DE-U1- 9 111 605
- GB-A- 1 020 316
- US-A- 3 191 005
- US-A1- 2001 014 212

## Beschreibung

Die Erfindung betrifft eine Streulichtblende eines auf der Innenseite einer Kraftfahrzeugscheibe angeordneten Bilderfassungsgerätes, wobei im Boden der Streulichtblende ein flaches Heizelement angeordnet ist, dessen Seitenflächen parallel zur Ober- und/oder Unterseite des Bodens sind, wobei die Streulichtblende im Kunststoffspritzguss hergestellt ist, und das flache Heizelement im Boden der Streulichtblende angeordnet und an seiner Ober- und Unterseite von einer Kunststoffschicht bedeckt ist.

Bei Bilderfassungsgeräten in Kraftfahrzeugen muss bei schlechten Umgebungsbedingungen ein fehlerfreies Funktionieren gewährleistet sein. Besonders problematisch sind hierbei Dunst- und Eisablagerungen außen auf der Windschutzscheibe. Deshalb ist eine Heizeinrichtung zur Beseitigung von Eis und Kondensat wichtig. Der Enteisungsprozess beruht auf einer Aufheizung der Windschutzscheibe durch die Wärmestrahlung einer beheizten Streulichtblende. Bei den meisten Enteisungssystemen wird die Streulichtblende von der Rückseite beheizt. Problematisch dabei ist, dass viel Material aufgeheizt werden muss, was die Reaktionszeit des Heizsystems heraufsetzt.

Aus der DE 10 2014 006 891 A1 ist eine Streulichtblende bekannt, die ein Heizelement aufweist, das zwischen einer Unterseite und einer Oberseite angeordnet ist, wobei die Streulichtblende in einem Spritzgussverfahren hergestellt wird. Flächige Heizelemente sind aus den Dokumenten WO 20009/146944 A2, US 2001/0014212 A1, GB 1 020 316 A, US 3 191 005 A und DE 91 11 605 U1 bekannt.

Aufgabe der Erfindung ist es, eine Streulichtblende bei einfacher Herstellung zu schaffen, deren Heizeinrichtung mit hoher Effektivität die Windschutzscheibe im Bereich des Bilderfassungsgerätes von Eis und Kondensat-Beschlag frei hält und das Herstellen der Streulichtblende mit dem Heizelement in einem einzigen Arbeitsgang im Spritzguss erfolgt.

Diese Aufgabe wird erfindungsgemäß dadurch gelöst,
- dass in der oberen und/oder unteren Kunststoffschicht (2, 3) mindestens ein Abstandshalter (5) angeordnet ist, der das flache Heizelement (4) während des Kunststoffspritzgießens in seiner Zwischenlage hält
- dass der/die Abstandshalter (5) von einer Textile gebildet ist/sind,
- dass die Textile(n) für flüssigen Kunststoff durchlässig ist/sind, und
- dass die Textile Zwischenräume aufweist, die für flüssigen Kunststoff durchlässig sind.

Eine solche Lösung hat u.a. folgende Vorteile:
- bei einfacher Herstellung und geringem Energieaufwand wird die Windschutzscheibe sicher von Eis und Beschlag freigehalten.
- Die Heizfolie ist vor schädlichen Umwelteinflüssen, wie z. B. starker Sonneneinstrahlung im Sommer geschützt.
- Die Fixierung der Streulichtblendenheizung in einem Verbundmaterial ermöglicht es, die Heizung bei höheren Durchschnittstemperaturen zu betreiben.
- Das Herstellen der Streulichtblende erfolgt mit dem Heizelement in einem einzigen Arbeitsgang (Spritzguss).

Die Herstellung des beheizten Bodens der Streulichtblende ist besonders einfach, wenn der/die Abstandshalter von einer Textile gebildet ist/sind. Hierbei wird dafür gesorgt, dass die Textile(n) für flüssigen Kunststoff durchlässig ist/sind. Auch sollte die Textile Zwischenräume aufweisen, die für flüssigen Kunststoff durchlässig sind. Hierbei kann die Textile gitterförmig sein.

Vorzugsweise wird vorgeschlagen, dass zwei oder mehr insbesondere textilförmige Abstandshalter angeordnet sind, die zwischen sich Zwischenräume bilden, durch die der flüssige Kunststoff hindurchtritt. Ferner wird vorgeschlagen, dass das flache Heizelement von einer Heizfolie gebildet ist, die eine elektrisch leitende Beschichtung und/oder leitende Bahnen aufweist.

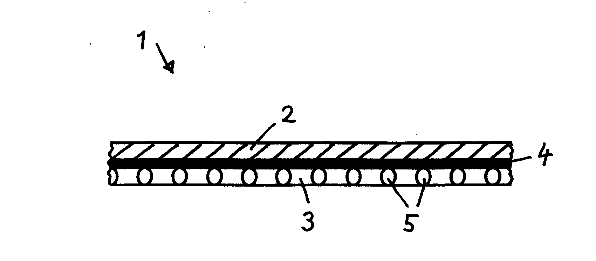

Ein Ausführungsbeispiel der Erfindung ist in der Zeichnung in einem Querschnitt schematisch dargestellt und wird im Folgenden näher beschrieben.

Auf der Innenfläche einer Kfz-Scheibe insbesondere einer Windschutzscheibe ist ein Bilderfassungsgerät befestigt, das vor und unterhalb des Objektivs mindestens einer Kamera eine Streulichtblende aufweist, die dafür sorgt, dass möglichst wenig Streulicht zum Objektiv gelangt.

Der Boden 1 der Streulichtblende besteht aus mindestens drei Schichten, einer oberen Kunststoffschicht 2, einer unteren Kunststoffschicht 3 und einer zwischen diesen zwei Schichten angeordneten Wärme erzeugenden Schicht aus einem flachen Heizelement 4. Die beiden Kunststoffschichten bestehen aus einem polymeren Kunststoff.

Die Streulichtblende mit ihrem Boden 1 wird im Kunststoff-Spritzgussverfahren in einem Arbeitsgang hergestellt, wobei vor dem Einspritzen des Kunststoffs in die Spritzgussform das flache Heizelement 4 eingelegt wird. Zudem wird in die Spritzgussform auf einer Seite des flachen Heizelements 4 mindestens ein Abstandshalter 5 eingelegt, der dafür sorgt, dass der eingespritzte Kunststoff zu beiden Seiten des Heizelements gelangt, so dass das Heizelement 4 mittig zwischen den zwei Kunststoffschichten 2, 3 liegt.

Im dargestellten Ausführungsbeispiel ist der Abstandshalter 5 in der unteren Kunststoffschicht 3 angeordnet. Stattdessen kann der Abstandshalter aber auch in der oberen Kunststoffschicht 2 oder in beiden Schichten 2, 3 angeordnet sein.

Vorzugsweise bildet eine Textile (Gewebe, Gewirke, Filz oder Vlies) den Abstandshalter 5, wobei die Fasern der Textile so angeordnet sind, dass beim Spritzguss der Kunststoff zwischen die Fasern hindurchdringen kann, z. B. aufgrund einer Gitterform. Alternativ oder zusätzlich kann die Textile nur stellenweise insbesondere punktförmig angeordnet sein, so dass die Textile Zwischenräume bildet, durch die der Kunststoff beim Einspritzen dringen kann.

Das flache Heizelement kann unterschiedlich aufgebaut sein. Vorzugsweise ist es von einer Heizfolie gebildet ist, die eine elektrisch leitende Beschichtung und/oder leitende Bahnen aufweist.

## Patentansprüche

1. Streulichtblende eines auf der Innenseite einer Kraftfahrzeugscheibe angeordneten Bilderfassungsgerätes, wobei im Boden der Streulichtblende ein flaches Heizelement (4) angeordnet ist, dessen Seitenflächen parallel zur Ober- und/oder Unterseite des Bodens sind, wobei
- die Streulichtblende im Kunststoffspritzguss hergestellt ist, und
- das flache Heizelement (4) im Boden (1) der Streulichtblende angeordnet und an seiner Ober- und Unterseite von einer Kunststoffschicht (2, 3) bedeckt ist, **dadurch gekennzeichnet,**
- **dass** in der oberen und/oder unteren Kunststoffschicht (2, 3) mindestens ein Abstandshalter (5) angeordnet ist, der das flache Heizelement (4) während des Kunststoffspritzgießens in seiner Zwischenlage hält
- **dass** der/die Abstandshalter (5) von einer Textile gebildet ist/sind,
- **dass** die Textile(n) für flüssigen Kunststoff durchlässig ist/sind, und
- **dass** die Textile Zwischenräume aufweist, die für flüssigen Kunststoff durchlässig sind.

2. Streulichtblende nach Anspruch 1, **dadurch gekennzeichnet, dass** die Textile gitterförmig ist.

3. Streulichtblende nach Anspruch 1 oder 2, **dadurch gekennzeichnet, dass** zwei oder mehr textilförmige Abstandshalter (5) angeordnet sind, die zwischen sich Zwischenräume bilden, durch die der flüssige Kunststoff hindurchtritt.

4. Streulichtblende nach einem der vorherigen Ansprüche, **dadurch gekennzeichnet, dass** das flache Heizelement (4) von einer Heizfolie gebildet ist, die eine elektrisch leitende Beschichtung und/oder leitende Bahnen aufweist.

## Claims

1. Lens hood of an imaging device arranged on the inside of a motor vehicle window, in which a flat heating element (4) is arranged in the bottom of the lens hood, with the lateral faces of the heating element parallel to the top and/or bottom of the floor, in which
- the lens hood is produced by means of plastic injection moulding and
- the flat heating element (4) is arranged in the floor (1) of the lens hood and covered by a layer of plastic on its top and bottom (2, 3), **characterised by**
- at least one spacer (5) being arranged in the upper and/or lower plastic layer (2, 3), keeping the flat heating element (4) in its intermediate layer during plastic injection moulding,
- the spacer(s) (5) being made of textile material,
- the textile material being permeable for liquid plastic and
- the textile material having gaps that are permeable for liquid plastic.

2. Lens hood according to claim 1, **characterised by** the textile material being formed as a lattice.

3. Lens hood according to claim 1 or 2, **characterised by** the arrangement of two or more textile material spacers (5) with gaps between them that are permeated by the liquid plastic.

4. Lens hood according to one of the preceding claims, **characterised by** the flat heating element (4) being formed by a heating foil with an electrically conductive coating and/or conductive tracks.

## Revendications

1. Pare-lumière pour lumière diffusée d'un appareil de saisie d'images disposé sur la face intérieure d'une vitre de véhicule automobile, un élément chauffant plat (4) étant disposé dans le fond du pare-lumière dont les surfaces latérales sont parallèles à la face supérieure et/ou inférieure du fond, sachant que
- le pare-lumière est fabriqué par moulage par injection de plastique, et
- l'élément chauffant plat (4) est disposé dans le fond (1) du pare-lumière et recouvert sur sa face supérieure et inférieure par une couche de matière plastique (2, 3), **caractérisé en ce,**
- **qu'**au moins une entretoise (5) disposée dans la couche de matière plastique supérieure et/ou inférieure (2, 3) retient l'élément chauffant plat (4) dans sa position intermédiaire pendant le moulage par injection de plastique
- **que** la ou les entretoises (5) sont formées par un textile,
- **que** le textile est perméable au plastique liquide, et
- **que** le textile présente des espaces intermédiaires perméables au plastique liquide.

2. Pare-lumière pour lumière diffusée selon la revendication 1 ou 2, **caractérisé en ce que** le textile est en forme de grille.

3. Pare-lumière pour lumière diffusée selon la revendication 1 ou 2, **caractérisé en ce que** au moins deux entretoises (5) en forme de textile disposées forment entre elles des espaces intermédiaires à travers lesquels passe le plastique liquide.

4. Pompe pare-lumière pour lumière diffusée selon l'une des revendications précédentes, **caractérisé en ce que** l'élément chauffant plat (4) est formé par un film chauffant présentant un revêtement électriquement conducteur et/ou des pistes conductrices.
